# EUROPEAN PATENT APPLICATION

(11) **EP 3 407 279 A1**
(43) Date of publication of application: **28.11.2018**
(21) Application number: 18173599.4
(22) Date of filing: 22.05.2018
(51) Int. Cl.: G06Q 20/32, G06Q 20/34

(54) **METHOD, APPARATUS AND TERMINAL DEVICE FOR INVOKING A VIRTUAL PUBLIC TRANSPORT CARD**

(30) Priority: 27.05.2017 CN 201710391295
(71) Applicant: Beijing Xiaomi Mobile Software Co., Ltd., Beijing 100085 (CN)
(72) Inventor: CHEN, Kai, Beijing, 100085 (CN); XU, Lina, Beijing, 100085 (CN); XIONG, Zuojin, Beijing 100085 (CN)
(74) Representative: Dehns

(57) **Abstract**

The disclosure provides a method, apparatus and terminal device for invoking a virtual public transport card. The method may include: obtaining (101) information for a unified card surface; displaying (102) one card surface based on the information for the unified card surface, wherein a plurality of virtual public transport cards are stored locally; obtaining (103) a current location; activating (104) a first virtual public transport card from the plurality of virtual public transport cards based on the current location, wherein the first virtual public transport card is associated with the current location; and requesting (105) public transport service based on the first virtual public transport card. The method, apparatus and terminal device for invoking a virtual public transport card provided in the disclosure may simplify use and management of the virtual public transport card, and thus improve user experience.

## Description

### FIELD

The present disclosure generally relates to smart public transport card technologies, and more particularly to a method, apparatus and terminal device for invoking a virtual public transport card.

### BACKGROUND

Near Field Communication (NFC) has gradually become a standard configuration of a terminal device such as a mobile phone. Simulation function of a NFC card of a terminal device may provide users with virtual public transport card services, which is one of the users' favorite features.

Currently in realization of the virtual public transport card function, the users need to first select a city to use the public transport card, then activate the public transport card, fill/top up the public transport card, and the like. Then the users may enjoy municipal public transport service in the city. But a user that travels frequently through many cities has a large number of virtual public transport cards due to the large number of cities that the user visits. Often, the user needs to find a suitable virtual public transport card from a large number of virtual public transport cards when the user is going to use the virtual public transport card service in a city, which causes inconvenience and affects user experience.

### SUMMARY

In the disclosure, a method, apparatus and terminal device for invoking a virtual public transport card are provided to simplify management and use of the virtual public transport card and to improve the user experience.

According to a first aspect of an embodiment of the present disclosure, there is provided a method for invoking a virtual public transport card. The method may include: obtaining information for a unified card surface; displaying one card surface based on the information for the unified card surface, wherein a plurality of virtual public transport cards are stored locally; obtaining a current location; activating a first virtual public transport card from the plurality of virtual public transport cards based on the current location, wherein the first virtual public transport card is associated with the current location; and requesting public transport service based on the first virtual public transport card.

Optionally, the method may further include: obtaining address information of a user, wherein the address information is associated with a historical activity track or schedule of the user; and obtaining and storing, based on the address information, a virtual public transport card associated with the address information.

Optionally, activating the first virtual public transport card may include: transmitting, based on the current location, a request for obtaining the first virtual public transport card when the first virtual public transport card is not stored locally; receiving and storing the first virtual public transport card; and activating the first virtual public transport card.

Optionally, requesting the public transport service based on the first virtual public transport card may include: performing a numerical transfer operation based on the first virtual public transport card.

Optionally, the method may further include: receiving setting information that includes reconfiguration information for the information for the unified card surface.

According to a second aspect of an embodiment of the present disclosure, there is provided an apparatus for invoking a virtual public transport card. The apparatus may include: a first obtainment module configured to obtain information for a unified card surface; a display module configured to display one card surface based on the information for the unified card surface, wherein a plurality of virtual public transport cards are stored locally; a second obtainment module configured to obtain a current location; an activation module configured to activate a first virtual public transport card from the plurality of virtual public transport cards based on the current location, wherein the first virtual public transport card is associated with the current location; and a request module configured to request public transport service based on the first virtual public transport card.

Optionally, the apparatus may further include: a third obtainment module configured to obtain address information of a user, wherein the address information is associated with a historical activity track or schedule of the user; a fourth obtainment module configured to obtain, based on the address information, a virtual public transport card associated with the address information; and a storage module configured to store the virtual public transport card associated with the address information.

Optionally, the activation module may include an obtainment sub-module configured to transmit, based on the current location, a request for obtaining the first virtual public transport card when the first virtual public transport card is not stored locally; a receiving sub-module configured to receive and store the first virtual public transport card; and an activation sub-module configured to activate the first virtual public transport card.

Optionally, the request module may be configured to perform a numerical transfer operation based on the first virtual public transport card.

Optionally, the apparatus may further include: a receiving module configured to receive setting information which includes reconfiguration information for the information for the unified card surface.

According to a third aspect of an embodiment of the present disclosure, there is provided a terminal device. The terminal device may include: a processor and a memory which is configured to store processor-executable instructions. The processor may be configured to obtain information for a unified card surface; display one card surface based on the information for the unified card surface, wherein a plurality of virtual public transport cards are stored locally; obtain a current location; activate a first virtual public transport card from the plurality of virtual public transport cards based on the current location, wherein the first virtual public transport card is associated with the current location; and request public transport service based on the first virtual public transport card.

According to a fourth aspect of an embodiment of the present disclosure, there is provided a computer readable storage media storing instructions, which when executed on a computer, cause the computer to perform a method, the method including: obtaining information for a unified card surface; displaying one card surface based on the information for the unified card surface, wherein a plurality of virtual public transport cards are stored locally; obtaining a current location; activating a first virtual public transport card from the plurality of virtual public transport cards based on the current location, wherein the first virtual public transport card is associated with the current location; and requesting public transport service based on the first virtual public transport card.

The technical solutions provided in embodiments of the present disclosure may achieve following beneficial effects. In the embodiments of the present disclosure, the card surfaces of the virtual public transport cards may be configured in a unified way, such that only one card is displayed irrespective of the number of the cards for the terminal device. The terminal device may automatically activate and use, based on the current location of the user, a virtual public transport card associated with the current location of the user, such that there is no need for the user to find a virtual public transport card from a large number of virtual public transport cards, that is, a corresponding virtual public transport card may be used, thus use and management of the virtual public transport card may be more convenient and simple. In addition, as only one card is displayed on the terminal device, the user may feel that a unified card is used no matter which card is actually being used. As a result, the user will not feel troubled due to the large number of virtual public transport cards, and thus the user experience is improved.

It is to be understood that both the forgoing general description and the following detailed description are exemplary and illustrative only, and will not limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1a is a solution for invoking a virtual public transport card according to a related art.
Fig. 1b is a solution for invoking a virtual public transport card according to an exemplary embodiment.
Fig. 2 is a flow chart illustrating a first embodiment of a method for invoking a virtual public transport card according to an exemplary embodiment.
Fig. 3 is a flow chart illustrating a method for activating a first virtual public transport card according to an exemplary embodiment.
Fig. 4 is a diagram illustrating a second embodiment of a method for invoking a virtual public transport card according to an exemplary embodiment.
Fig. 5 is a diagram illustrating a third embodiment of a method for invoking a virtual public transport card according to an exemplary embodiment.
Fig. 6 is a diagram illustrating a first embodiment of an apparatus for invoking a virtual public transport card according to an exemplary embodiment.
Fig. 7 is a diagram illustrating an activation module 14 according to an exemplary embodiment.
Fig. 8 is a diagram illustrating a second embodiment of an apparatus for invoking a virtual public transport card according to an exemplary embodiment.
Fig. 9 is a diagram illustrating a third embodiment of an apparatus for invoking a virtual public transport card according to an exemplary embodiment.
Fig. 10 is a diagram illustrating a terminal device according to an exemplary embodiment.
Fig. 11 is a diagram illustrating another terminal device according to an exemplary embodiment.

Embodiments of the present disclosure, which will be described in detail below, are shown through the above figures. The drawings and description are not intended to limit the scope of the present disclosure by any means, but rather to illustrate the concept of the present disclosure to those skilled in the art by reference to specific embodiments.

### DETAILED DESCRIPTION

Exemplary embodiments are described in detail herein, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

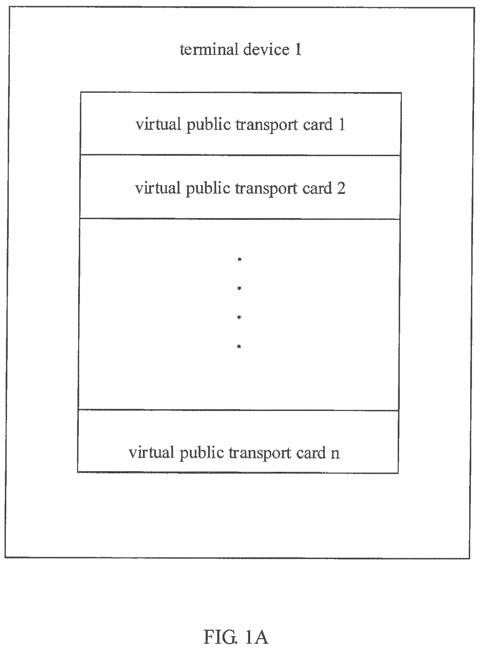

Fig. 1a is a solution for invoking a virtual public transport card as known in the related art. As shown in Fig. 1a, a terminal device 1 stores N virtual public transport cards in which each public transport card may have a different pattern for its card surface depending on the configuration of the respective public transport systems. When a virtual public transport card is used, the terminal device 1 may display the N virtual public transport cards in the form of a list to a user. The user needs to select a virtual public transport card from the list. The terminal device may display a pattern of the virtual public transport card selected by the user upon the user selecting the virtual public transport card. For example, when the user selects a virtual public transport card 1, the terminal device may display a card surface of the virtual public transport card 1; when the user selects a virtual public transport card n, the terminal device may display a card surface of the virtual public transport card n. For a user that travels frequently, however, he/she has a large number of virtual public transport cards due to a lot of cities being involved. Often, the user needs to find a suitable virtual public transport card from a large number of virtual public transport cards when the user is going to use the virtual public transport card service in a city, which causes inconvenience and affects user experience.

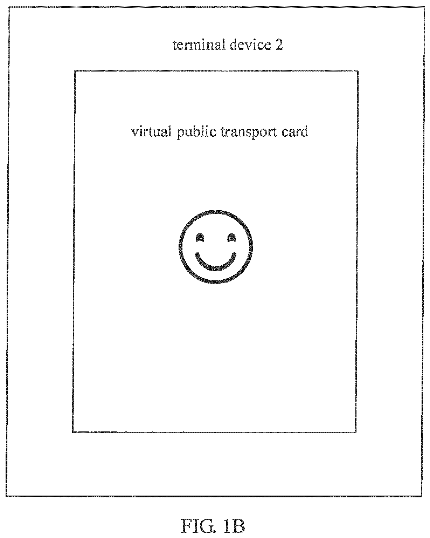

In view of the above-mentioned problems in the related art, the present disclosure provides a method for invoking a virtual public transport card. Referring to Fig. 1b, which is a solution for invoking a virtual public transport card according to an exemplary embodiment. As shown in Fig. 1b, a terminal device 2 may store N virtual public transport cards. The terminal device 2 may obtain a preconfigured unified card surface, and then display one card. The card surface of this card is the above obtained unified card surface. That is, in the example of Fig. 1b, only one card is displayed on the terminal device 2 regardless of the number of virtual public transport cards stored in the terminal device 2. The terminal device 2 may activate a virtual public transport card that can be used at the current location of the user based on the current location to support the user to request the public transport service at the current location. For example the public transport service may be requested by completing a numerical transfer operation (e.g., by charging the account of the public transport card when it is used at a ticket gate of the subway). The present embodiment does not limit the manner in which the public transport service is requested.

The terminal device 2 may display one card based on the preconfigured unified card surface before activating a virtual public transport card, and then activate the virtual public transport card that can be used at a current location of the user based on the current location. The terminal device 2 may also display one card based on the preconfigured unified card surface after activating a target public transport card. Activation of the target public transport card and display of the card based on the preconfigured unified card surface may be two independent operations. There is no limitation in sequence in between.

In the case that the terminal device 2 displays one card based on the preconfigured unified card surface, the displayed card surface may be identical when different target public transport cards are activated. Also, there may be corresponding changes for the displayed card surface on the basis of the unified card surface if different target public transport cards are actually activated. For example, identification of the target public transport card may be overlapped on the unified card surface, such as geographical location identification, etc. The specific manner of the changes is not limited in the present disclosure.

From the above solutions, the user would feel that only one unified virtual public transport card is used regardless of which virtual public transport card is actually used. As a result, the user will not feel troubled due to the large number of virtual public transport cards, and thus the user experience is improved.

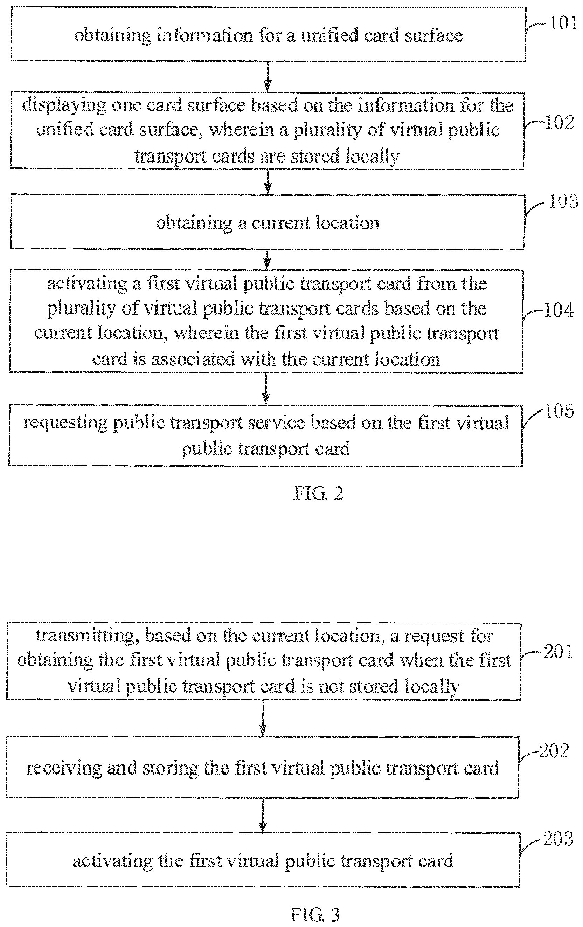

Fig. 2 is a flow chart illustrating a first embodiment of a method for invoking a virtual public transport card according to an exemplary embodiment. The method may be performed by an apparatus for invoking a virtual public transport card (hereinafter referred to as an invoking apparatus), which may be specifically installed in a terminal device as a client. As shown in Fig. 2, the method may include the following steps.

In step 101, information for a preconfigured unified card surface is obtained.

In the embodiment, the unified card surface is referred to as a pattern or symbol of card surface of a virtual public transport card for display. The information for the unified card surface may be preconfigured and stored in a database.

Optionally, the method for configuration of the unified card surface in the embodiment may include two possible ways.

In one possible way, the user may set the unified card surface based on his/her preference. For example, the user may set a favorite photo, picture, etc. as the unified card surface of the virtual public transport cards.

In another possible way, the invoking apparatus may set the unified card surface for the virtual public transport cards based on a preset policy. For example, the invoking apparatus may obtain a picture or pattern from a local database or a network database, and set the obtained picture or pattern as the unified card surface for the virtual public transport cards. In this way, the invoking apparatus may update and reset the unified card surface regularly.

When using the public transport service, the user may trigger the invoking apparatus to obtain the information for the unified card surface using a specific trigger method. Optionally, in the embodiment, the manner the user triggers the invoking apparatus may include the following ways.

In one possible way, the user may send a trigger signal via a human-computer interaction interface, such as by clicking an application software that may provide the virtual public transport card function on the interaction interface. In another possible way, the user may trigger the invoking apparatus by a particular key combination on the terminal device, for example, by double-clicking a power key. In yet another possible way, the user may trigger the invoking apparatus by a voice command based on the voice interaction function of the terminal device. The foregoing is merely illustrative and is not intended to limit the present disclosure.

In step 102, one card surface is displayed based on the information for the unified card surface. More than one virtual public transport cards are stored locally.

For example, if the preconfigured unified card surface is a photo of the user's family, the photo is displayed as the card surface of the virtual public transport cards.

If there is no virtual public transport card stored in the terminal device, it may display one card face based on the information for the unified card surface, or it may display other information such as the prompt message that no public transport card is available, or it may display no information. In the embodiment, there is no limitation on how to display the case that no the virtual public transport card is stored.

In step 103, a current location is obtained.

Optionally, in the embodiment, the manner to obtain the current location may include the following ways.

In one possible way, if the terminal device is equipped with a GPS module, the user's current location may be obtained through the GPS module.

In another possible way, if the terminal device is installed with an electronic map or a navigation software, the current location of the user may be obtained by a positioning function of the software.

In yet another possible way, if the terminal device is a device capable of mobile communication such as a mobile phone, the location of the user may be positioned through the base station to which the terminal device currently belongs.

Positioning of the user in the embodiment is not limited to the above-described ways, and any positioning method in the related arts may be applied to the embodiment.

In step 104, a first virtual public transport card is activated. The first virtual public transport card is associated with the current location.

In practice, the operation of activating the first virtual public transport card may be performed in two different scenarios.

In one scenario, the terminal device stores the first virtual public transport card associated with the current location (i.e., stores a virtual public transport card suitable for the public transport system at the current location). For example, the user is currently in a city A, the terminal device stores a virtual public transport card B that can be used in the public transport system of the city A, and then the invoking apparatus may activate the virtual public transport card B.

In another scenario, the first virtual public transport card associated with the current location is not stored in the terminal device, and thus the invoking apparatus needs to obtain the first virtual public transport card associated with the current location from the public transport system at the current location.

In step 105, public transport service is requested based on the first virtual public transport card.

In an example, requesting the public transport service based on the first virtual public transport card may include a numerical transfer operation based on the first virtual public transport card. The numerical transfer operation may include top up, payment, and the like. There is no limitation to the implementation of top up and payment in the embodiment. For example, the user may be prompted to top up the public transport card when its balance is less than a preset value; or the user may be prompted to update available resources when the current resource is not sufficient to provide payment service for the public transport card. In practice, the requested public transport service is not limited to the numerical transfer operation. There is no limitation to the method of requesting the public transport service in the embodiment.

In the embodiments, the card surfaces of the virtual public transport cards may be configured in a unified way, such that only one card is displayed irrespective of the number of the cards for the terminal device, that is, the unified card surface is displayed. When the terminal device requests public transport service, the terminal device may automatically activate and use, based on the current location of the user, a virtual public transport card associated with the current location of the user, such that there is no need for the user to find a virtual public transport card from a large number of virtual public transport cards, that is, a corresponding virtual public transport card may be used, thus use and management of the virtual public transport card may be more convenient and simple. In addition, as only one card is displayed on the terminal device, the user may feel that a unified card is used no matter which card is actually being used. As a result, the user will not feel troubled due to the large number of virtual public transport cards, and thus the user experience is improved.

Fig. 3 is a flow chart illustrating a method for activating a first virtual public transport card according to an exemplary embodiment. Fig. 3 shows operations to activate the first virtual public transport card associated with the current location when the first virtual public transport card is not stored in the terminal device.

In step 201, a request for obtaining the first virtual public transport card is transmitted based on the current location when the first virtual public transport card is not stored locally.

For example, in the case that the user is located in the city A currently and the first virtual public transport card applicable to the city A is not stored in the terminal device, the invoking apparatus may transmit the request for obtaining the first virtual public transport card to a public transport service platform of the city A via the terminal device. The request includes at least the identification information of the terminal device. The public transport service platform of the city A may transmit information of the first virtual public transport card applicable to the public transport system of the city A to the terminal device after receiving the request, so that the terminal device may install the first virtual public transport card after receiving the information.

In step 202, the first virtual public transport card is received and stored.

The first virtual public transport card is stored in the terminal device in association with the current location of the user.

In step 203, the first virtual public transport card is activated.

In the embodiment, when the first virtual public transport card associated with the current location of the user is not stored locally, the information of the first virtual public transport card associated with the current location is automatically obtained from the public transport service platform at the current location and then the first virtual public transport card is activated. As a result, it is avoided that the user manually activates the card, thus management and use of virtual public transport card is simplified and user experience is effectively improved.

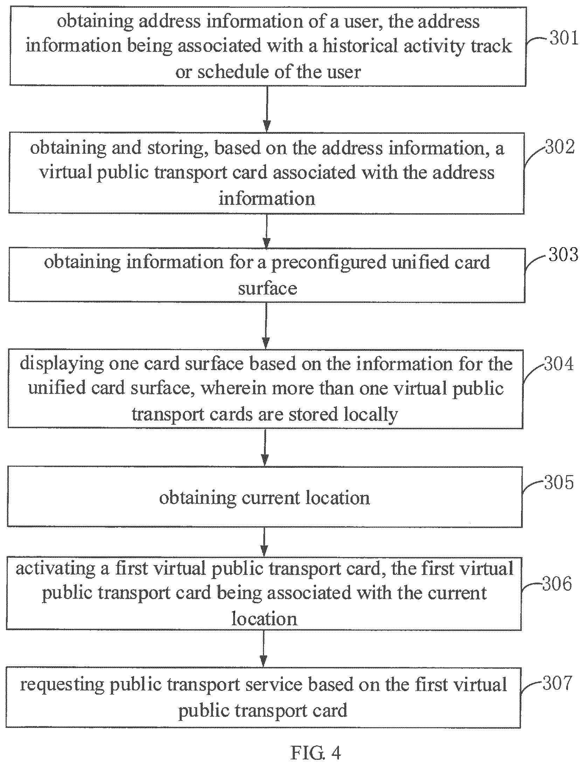

Fig. 4 is a diagram illustrating a second embodiment of a method for invoking a virtual public transport card according to an exemplary embodiment. As shown in Fig. 4, the method may include the following steps on the basis of embodiments shown in Fig. 2.

In step 301, address information of the user is obtained. The address information is associated with the user's historical activity track or schedule.

The address information of the user in the embodiments may include address information of the user's history location. Such address information may be associated with the user's historical activity track. The address information of the user in the embodiments may also include address information of a location where the user plans to arrive. Such address information may be associated with the user's schedule.

Specifically, in the embodiments, the user's address information may be obtained in the following ways.

In one possible way, the address information of the user may be obtained from the software having a positioning function in the terminal device. Such address information may be the address information of the user's history location.

In another possible way, the address information of the user may be obtained based on the schedule input by the user. Such address information may be the address information of the location where the user is about to arrive.

In step 302, a virtual public transport card associated with the address information is obtained and stored based on the address information.

When the virtual public transport card associated with the obtained address information is not stored locally, the information of the virtual public transport card may be obtained from the public transport system service platform associated with the address information, and then the information of the virtual public transport card may be stored in association with the address information.

In step 303, the information for the preconfigured unified card surface is obtained.

In step 304, one card surface is displayed based on the information for the unified card surface. More than one virtual public transport cards can be stored locally.

In step 305, the current location is obtained.

In step 306, the first virtual public transport card is activated. The first virtual public transport card is associated with the current location.

In step 307, public transport service is requested based on the first virtual public transport card.

The implementations of steps 303-307 are similar to those of steps 101-105 and detailed description will be omitted here.

In addition, it is to be noted that any described order between steps 301-302 and other steps of the embodiments is illustrated by way of example only. In practice, however, steps 301-302 and other steps of the embodiments may also be performed in any other order.

In the embodiments, the address information of the user's history location and/or the address information of the location where the user is about to arrive may be obtained. Also, the virtual public transport card associated with the location where the user may arrive again or is about to arrive may be obtained in advance. As a result, the time used to activate a card may be saved, and thus user experience may be improved.

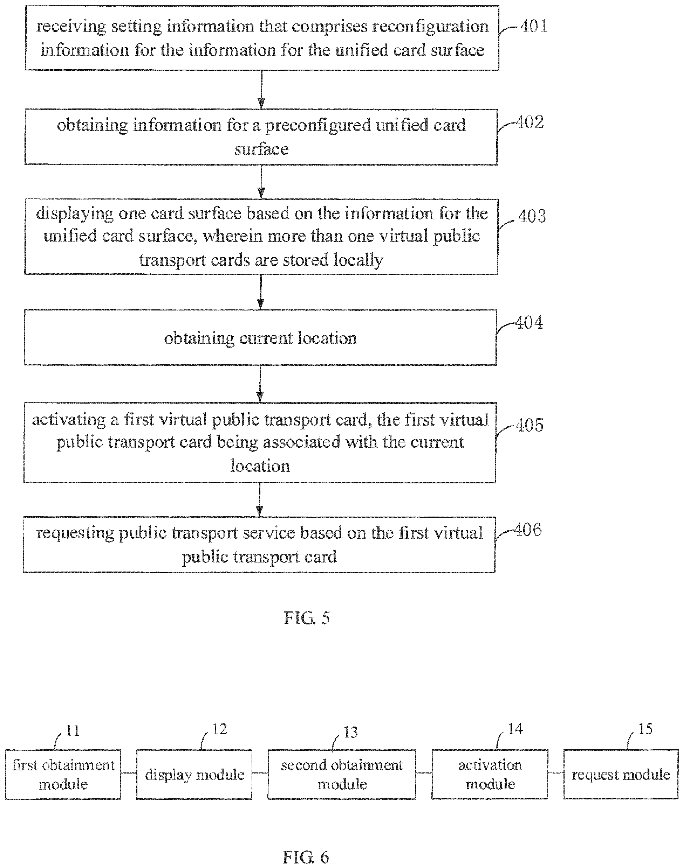

Fig. 5 is a diagram illustrating a third embodiment of a method for invoking a virtual public transport card according to an exemplary embodiment.

In step 401, setting information is received. The setting information may include reconfiguration information for information for the unified card surface.

In step 402, the information for the preconfigured unified card surface is obtained.

In step 403, one card surface is displayed based on the information for the unified card surface. More than one virtual public transport cards can be stored locally.

In step 404, a current location is obtained.

In step 405, a first virtual public transport card is activated. The first virtual public transport card is associated with the current location.

In step 406, public transport service is requested based on the first virtual public transport card.

The implementations of steps 402-406 are similar to those of steps 101-105 and detailed description will be omitted here.

In addition, it is to be noted that any described order between step 401 and other steps of the embodiments is illustrated by way of example only. In practice, however, step 401 and other steps of the embodiments may also be performed in any other order.

The methods for invoking a virtual public transport card provided by the embodiments allow the user to reconfigure the card surface of the unified virtual public public transport card based on individual preference so as to better meet individual needs and to enhance user experience.

Fig. 6 is a diagram illustrating a first embodiment of an apparatus for invoking a virtual public transport card according to an exemplary embodiment. As shown in Fig. 6, the apparatus may include: a first obtainment module 11 configured to obtain information for a preconfigured unified card surface; a display module 12 configured to display one card surface based on the information for the unified card surface, wherein more than one virtual public transport cards are stored locally; a second obtainment module 13 configured to obtain current location; an activation module 14 configured to activate a first virtual public transport card, the first virtual public transport card being associated with the current location; and a request module 15 configured to request public transport service based on the first virtual public transport card.

Optionally, the request module 15 may be configured to perform a numerical transfer operation based on the first virtual public transport card.

The apparatus provided in the embodiment may be used to carry out the technical solutions of the embodiments shown in Fig. 1. The implementation manner and beneficial effect of the apparatus are similar to that of the embodiments shown in Fig. 1 and detailed description will be omitted here.

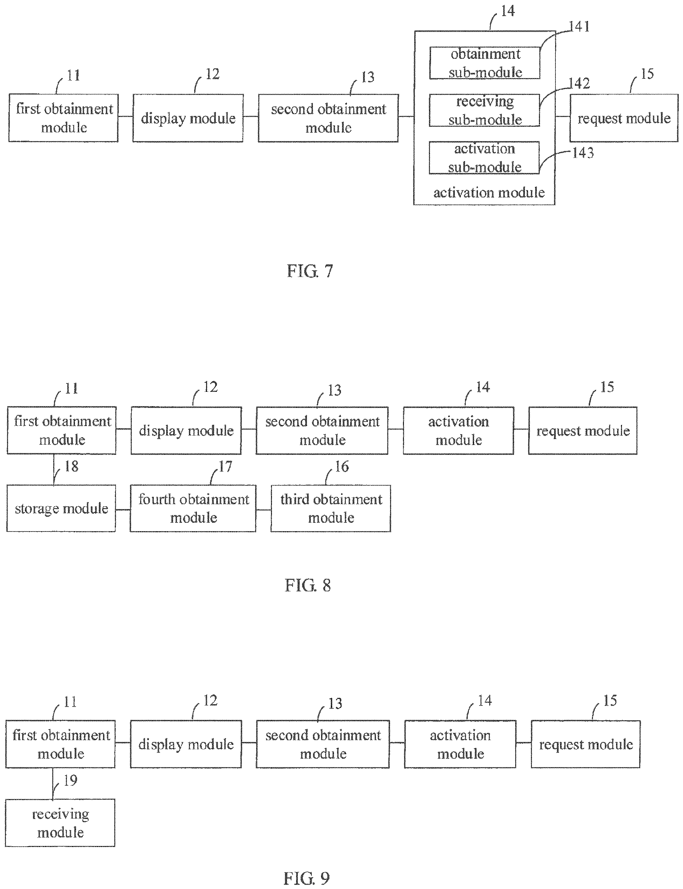

Fig. 7 is a diagram illustrating an activation module 14 according to an exemplary embodiment. As shown in Fig. 7, the activation module 14, on the basis of the structure shown in Fig. 6, may include: an obtainment sub-module 141 configured to transmit, based on the current location, a request for obtaining the first virtual public transport card when the first virtual public transport card is not stored locally; a receiving sub-module 142 configured to receive and store the first virtual public transport card; and an activation sub-module 143 configured to activate the first virtual public transport card.

The apparatus provided in the embodiment may be used to carry out the technical solutions of the embodiments shown in Fig. 3. The implementation manner and beneficial effect of the apparatus are similar to that of the embodiments shown in Fig. 3 and detailed description will be omitted here.

Fig. 8 is a diagram illustrating a second embodiment of an apparatus for invoking a virtual public transport card according to an exemplary embodiment. As shown in Fig. 8, the apparatus, on the basis of Fig. 6, may further include: a third obtainment module 16 configured to obtain address information of a user, the address information being associated with the user's historical activity track or schedule; a fourth obtainment module 17 configured to obtain, based on the address information, a virtual public transport card associated with the address information; and a storage module 18 configured to store the virtual public transport card associated with the address information.

The apparatus provided in the embodiment may be used to carry out the technical solutions of the embodiments shown in Fig. 4. The implementation manner and beneficial effect of the apparatus are similar to those of the embodiments shown in Fig. 4 and detailed description will be omitted here.

Fig. 9 is a diagram illustrating a third embodiment of an apparatus for invoking a virtual public transport card according to an exemplary embodiment. As shown in Fig. 9, the apparatus, on the basis of Fig. 6, may further include: a receiving module 19 configured to receive setting information which includes reconfiguration information for the information for the unified card surface.

The apparatus provided in the embodiment may be used to carry out the technical solutions of the embodiments shown in Fig. 5. The implementation manner and beneficial effect of the apparatus are similar to that of the embodiments shown in Fig. 5 and detailed description will be omitted here.

In the apparatus for invoking a virtual public transport card in the above embodiments, the specific operation manner of each module and sub-module has been described in detail in the method embodiments, and detailed description will be omitted here.

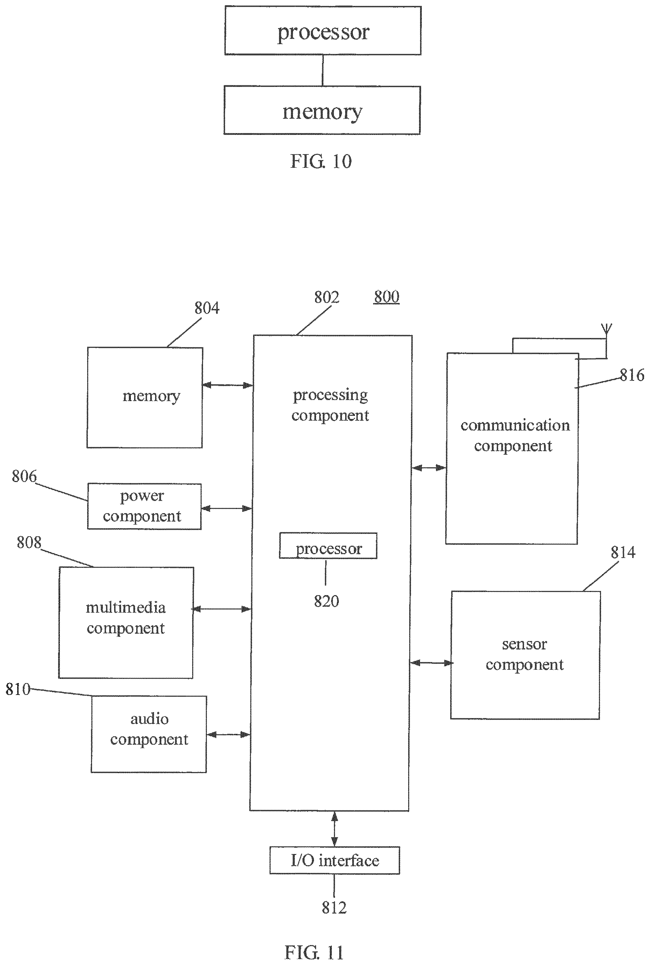

The internal function and structure of the terminal device is described above. In practice, as shown in Fig. 10, the terminal device may include a processor and a memory which is configured to store processor-executable instructions. The processor may be configured to obtain information for a preconfigured unified card surface; display one card surface based on the information for the unified card surface, wherein more than one virtual public transport cards are stored locally; obtain current location; activate a first virtual public transport card, the first virtual public transport card being associated with the current location; and request public transport service based on the first virtual public transport card.

In the embodiments, the card surfaces of the virtual public transport cards may be configured in a unified way, such that a unified card surface is displayed for all the virtual public transport cards stored in the terminal device. When public transport service is requested, the terminal device may automatically activate and use, based on the current location of the user, a virtual public transport card associated with the current location of the user, such that there is no need for the user to find a virtual public transport card from a large number of virtual public transport cards, that is, a corresponding virtual public transport card may be used, thus use and management of the virtual public transport card may be more convenient and simple. In addition, as a unified card surface is displayed for all the virtual public transport cards stored in the terminal device, the user may feel that a unified card is used no matter which card is actually being used. As a result, the user will not feel troubled due to the large number of virtual public transport cards, and thus the user experience is improved.

Fig. 11 is a diagram illustrating another terminal device according to an exemplary embodiment. For example, terminal device 800 may be a mobile phone, a computer, a digital broadcast terminal, a messaging device, a gaming console, a tablet, a medical device, exercise equipment, a personal digital assistant, and the like.

Referring to Fig. 11, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power for the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal device 800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components (e.g., the display and the keypad, of the terminal device 800), a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a Random Access Memory (RAM), a CD-ROM, a magnetic tape, a floppy disc, an optical data storage device, and the like.

In the examplary embodiments, a non-transient computer readable storage media having instructions therein is provided, which when executed by a processor of a mobile terminal cause the mobile terminal to perform a method for invoking a virtual public transport card. The method may include: obtaining information for a preconfigured unified card surface; displaying one card surface based on the information for the unified card surface, wherein more than one virtual public transport cards are stored locally; obtaining current location; activating a first virtual public transport card, the first virtual public transport card being associated with the current location; and requesting public transport service based on the first virtual public transport card.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for invoking a virtual public transport card, **characterized by** comprising:
obtaining (101) information for a unified card surface;
displaying (102) one card surface based on the information for the unified card surface, wherein a plurality of virtual public transport cards are stored locally;
obtaining (103) a current location;
activating (104) a first virtual public transport card from the plurality of virtual public transport cards based on the current location, wherein the first virtual public transport card is associated with the current location; and
requesting (105) public transport service based on the first virtual public transport card.

2. The method of claim 1, further comprising:
obtaining (301) address information of a user, wherein the address information is associated with a historical activity track or schedule of the user; and
obtaining and storing (302), based on the address information, a virtual public transport card associated with the address information.

3. The method of claim 1 or 2, wherein activating (104) the first virtual public transport card comprises:
transmitting (201), based on the current location, a request for obtaining the first virtual public transport card when the first virtual public transport card is not stored locally;
receiving and storing (202) the first virtual public transport card; and
activating (203) the first virtual public transport card.

4. The method of claim 1, 2 or 3, wherein requesting the public transport service based on the first virtual public transport card comprises:
performing a numerical transfer operation based on the first virtual public transport card.

5. The method of any preceeding claim, further comprising:
receiving (401) setting information that comprises reconfiguration information for the information for the unified card surface.

6. An apparatus for invoking a virtual public transport card, **characterized by** comprising:
a first obtainment module (11) configured to obtain information for a unified card surface;
a display module (12) configured to display one card surface based on the information for the unified card surface, wherein a plurality of virtual public transport cards are stored locally;
a second obtainment (13) module configured to obtain a current location;
an activation module (14) configured to activate a first virtual public transport card from the plurality of virtual public transport cards based on the current location, wherein the first virtual public transport card is associated with the current location; and
a request module (15) configured to request public transport service based on the first virtual public transport card.

7. The apparatus of claim 6, further comprising:
a third obtainment module (16) configured to obtain address information of a user, wherein the address information is associated with a historical activity track or schedule of the user;
a fourth obtainment module (17) configured to obtain, based on the address information, a virtual public transport card associated with the address information; and
a storage module (18) configured to store the virtual public transport card associated with the address information.

8. The apparatus of claim 6 or 7, wherein the activation module comprises:
an obtainment sub-module (141) configured to transmit, based on the current location, a request for obtaining the first virtual public transport card when the first virtual public transport card is not stored locally;
a receiving sub-module (142) configured to receive and store the first virtual public transport card; and
an activation sub-module (143) configured to activate the first virtual public transport card.

9. The apparatus of claim 6, 7 or 8, wherein the request module (15) is configured to perform a numerical transfer operation based on the first virtual public transport card.

10. The apparatus of any of claims 6 to 9, further comprising:
a receiving module (19) configured to receive setting information that comprises reconfiguration information for the information for the unified card surface.

11. A terminal device (800), **characterized by** comprising:
a processor (820); and
a memory (804) which is configured to store processor-executable instructions,
wherein the processor is configured to:
obtain information for a unified card surface;
display one card surface based on the information for the unified card surface, wherein a plurality of virtual public transport cards are stored locally;
obtain a current location;
activate a first virtual public transport card from the plurality of virtual public transport cards based on the current location, wherein the first virtual public transport card is associated with the current location; and
request public transport service based on the first virtual public transport card.

12. A computer readable storage media storing instructions, which when executed on a computer, cause the computer to perform a method, **characterized by** the method comprising:
obtaining information for a unified card surface;
displaying one card surface based on the information for the unified card surface, wherein a plurality of virtual public transport cards are stored locally;
obtaining a current location;
activating a first virtual public transport card from the plurality of virtual public transport cards based on the current location, wherein the first virtual public transport card is associated with the current location; and
requesting public transport service based on the first virtual public transport card.
